(19) Europäisches Patentamt
European Patent Office
Office européen des brevets

(11) Publication number: **0 297 909 A2**

(12) # EUROPEAN PATENT APPLICATION

(21) Application number: 88306034.5

(22) Date of filing: 30.06.88

(51) Int. Cl.[4]: C 08 G 2/18
C 08 G 2/38, C 08 G 65/22

(30) Priority: 02.07.87 JP 166026/87

(43) Date of publication of application: 04.01.89 Bulletin 89/01

(84) Designated Contracting States: AT BE CH DE ES FR GB GR IT LI LU NL SE

(71) Applicant: POLYPLASTICS CO. LTD.
30, Azuchimachi 2-chome
Higashi-ku Osaka-shi Osaka (JP)

(72) Inventor: Hijikata, Kenji
8-8, Fujimidai
Mishima-shi Shizuoka (JP)

Nakane, Toshio
885-11, Miyajima
Fuji-shi Shizuoka (JP)

Kageyama, Yukihiko
815, Gendojicho
Fuji-shi Shizuoka (JP)

(74) Representative: Jackson, Peter et al
HYDE, HEIDE & O'DONNELL 146 Buckingham Palace Road
London SW1W 9TR (GB)

(54) **Silicon containing polyacetal copolymer and manufacturing method thereof.**

(57) A silicon-containing polyacetal copolymer comprises silicone oil units having the formula (A) and polyacetal units:

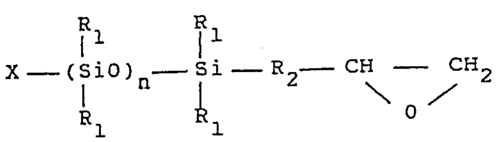

(A)

(wherein $R_1$ stands for alkyl or phenyl group; $R_2$, a divalent organic group; X, a group selected from among $-NH_2$, -OH,

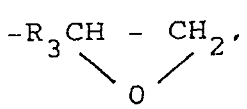

$R_4OH$, $R_5COOH$, $R_6COOR_7$, $-R_8$ and $-OR_9$, $R_3$ representing a divalent organic group, $R_4 \sim R_6$ alkylene groups with number of carbon atoms 1 ~ 10, $R_7 \sim R_9$ alkyl groups with number of carbon atoms 1 ~ 10, and n a number of 5 ~ 1000).

EP 0 297 909 A2

## Description

### Silicon Containing Polyacetal Copolymer and Manufacturing Method Thereof

The present invention relates to a copolymer or a novel silicon containing polyacetal polymer which is excellent in impact, water and wear resistance and a manufacturing method thereof.

( Statement of Prior Arts )

Polyacetal resin is being widely utilized as a thermoplastic resin which is excellent in mechanical properties such as strength modulus of elasticity and frictional characteristics.

These resins have excellent chemical and thermal properties and mechanical strength, but attainment of improvement through compounding and chemical structural improvements, etc., by way of copolymerization, etc., are still now being tried, with a view to further ameliorating the aforementioned properties.

There is available, for example, a method for introducing various functional groups into the terminals of silicone oil (Japanese Patent Application Laid-Open Nos. Sho 59-33352 and 60-424497) for enhancement of its compatibility with this resin, when mixing it with the silicone oil for the purpose of achieving further improvement in frictional characteristics; however, the effect of improving its compatibility with such a nonpolar material as silicone oil, etc., is still insufficient, when it has been merely subjected to such a terminal treatment.

In this situation, attempts were made to improve the polyacetal's compatibility with silicone oil, with silicone oil bonded to its terminal(s), using silicone oil as a molecular weight adjuster, when polymerizing polyacetal (Japanese Patent Application Laid-Open Nos. Sho 58-174412, 58-179215 and 60-176523); for example, Japanese Patent Application Laid-Open No. Sho 58-174412 discloses a method of adding

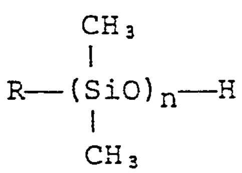

(R represents alkyl group) as a molecular adjuster, when making polymerication of polyacetal, and Japanese Patent Application Laid-Open No. Sho 58-179215 a method of adding

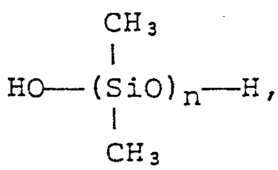

respectively.

In all of these instances, however, it is difficult to obtain highly polymerized products; thus, the physical properties which this resin intrinsically possesses are greatly sacrificed.

(Summary of the Invention)

The present inventors, as a result of their assiduous studies in an effort to solve these problems, have found out the fact that by introducing particular siloxane's soft segment into the polyacetal polymer by way of a covalent bond, impact resistance and frictional characteristic are further improved and a hydrophobic property is provided, resulting in further reduction of water absorbency, without significantly reducing the excellent characteristics of the base polymer, whereby copolymers with very high practical utility have been obtained, which finding has lead to completion of this invention.

Since the terminal reactive silicone oil (A) which is used according to this invention acts as a copolymerizing comonomer, not as a molecular weight adjuster for polymerization of polyacetal, its use permits introduction of the siloxane segment without reducing the molecular weight of the block copolymer formed, thereby providing a polyacetal copolymer improved in lubricant properties, water absorbency, etc., while retaining the characteristics the polyacetal resin originally possessed.

The invention relates to a silicon-containing polyacetal copolymer which comprises 50 to 99.999 per cent of a polyacetal segment bonded covalently to 0.001 to 50 percent by weight of a silicone oil unit having at least one reactive terminal group and designated by the general formula

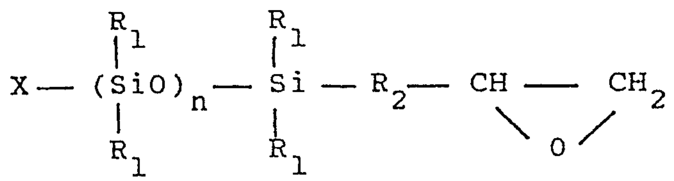 (A)

wherein $R_1$ denotes an alkyl or phenyl group; $R_2$ and $R_3$ each denote a divalent organic group; X denotes a group selected from $-NH_2$,

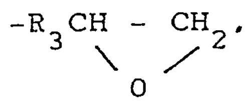

$R_4OH$, $R_5COOH$, $R_6COOR_7$, $-R_8$ and $OR_9$, $R_4$ to $R_6$ each denote an alkylene group with 1 to 10 carbon atoms, $R_7$ to 9 each denote an alkyl group with 1 to 10 carbon atoms; and n is a number from 5 to 1000.

The silicon-containing polyacetal copolymer of the invention is obtained by binding the silicone oil and the polyacetal by way of a covalent bonding. It is preferable that R1 is an alkyl group having 1 to 6 carbon atoms or a phenyl; R2 and R3 each are an alkylene group having 1 to 3,000 carbon atoms, an oxyalkylene having 1 to 6 carbon atoms, a polyoxyalkylene having 1 to 3,000 carbon atoms, an alkylene ester group having 1 to 10 carbon atoms, an alkylene sulfide group having 1 to 10 carbon atoms or an alkyleneamide group having 1 to 10 carbon atoms.

The polyacetal segment, as herein designated, has polyoxymethylene as its main skeleton and is either a homopolymer which is formed by polymerization of either formaldehyde or trioxane or (b) a copolymer composed of either formaldehyde or tioxane as its main component and one or two or more members of comonomers selected from among cyclic ethers or cyclic formals such as ethylene oxide, propylene oxide, oxetane, dioxorane, dioxepane, trioxepane and butanediol formal. The degree of polymerisation of the polyacetal segment is preferably 5 to 2000.

The invention includes within its scope both the polyacetal copolymer and a method for its production. Thus for manufacturing such a silicon-containing polyacetal copolymer, there may be mentioned a method in which one or more of formaldehyde, a mixture of formaldehyde and a comonomer copolymerizable therewith, trioxane, or a mixture of trioxane and a comonomer copolymerizable therewith are copolymerized, by heating in the presence of a catalyst, with at least 0.001% by weight of a terminally reactive silicone oil designated by the general formula

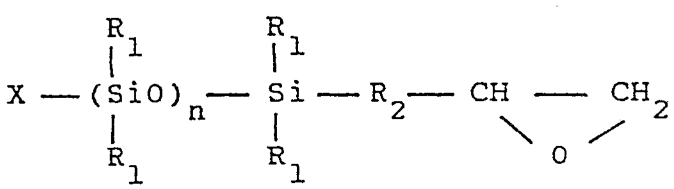 (A)

wherein $R_1$ denotes an alkyl or phenyl group; $R_2$ and $R_3$ each denote a divalent organic group; X denotes a group selected from $-NH_2$, -OH,

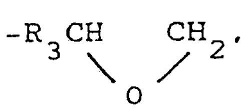

$R_4OH$, $R_5COOH$, $R_6COOR_7$, $-R_8$ and $-OR_9$, $R_4$ to $R_6$ each denote an alkylene group with 1 to 10 carbon atoms, $R_7$ to $R_9$ each denote an alkyl group with 1 to 10 carbon atoms; and n is a number from 5 to 1000.

The main component of the mixture to be copolymerised may be formaldehyde or trioxane. The or each comonomer is preferably selected from among cyclic ethers or cyclic formals such as ethylene oxide, propylene oxide, oxetane, dioxorane, dioxepane, trioxepane, butane-diol formal etc., and terminally reactive silicone oil (A) are copolymerized by heating in the presence of a catalyst. And as a material for supplying formaldehyde, paraformaldehyde may be used.

The terminally reactive silicone oil used according to this invention is a material represented by the aforementioned general formula (A). However. use of mixtures of more than two members of such a group of

materials is permissible.

When groups other than

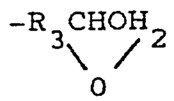

are used as X in the general formula (A), the copolymers obtained will be block copolymers or comb-shape graft copolymers.

And when X is

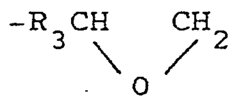

or when the silicone oil has glycidyl groups at both terminals, a graft copolymer formed by cross linking polyacetal segments with siloxane segments will be obtained. Particularly desirable materials are polydimethyl siloxane diglycidyls represented by the formula (A) in which each $R_1$ represents a methyl group, and $R_2$ and $R_3$, $-CH_2-$, $-OCH_2-$, $-CH_2CH_2CH_2OCH_2-$, etc., with their polymerization degrees 5 to 1000, preferably 10 to 500.

The ratio by weight of the aforementioned terminal reactive silicone oil to the monomers composing the polyacetal segment should be 0.001 ~ 50 : 99.999 ~ 50, preferably, 0.005 ~ 30 : 99.995 ~ 70.

In the manufacturing method of silicon-containing polyacetal copolymer of this invention, the polymerization should be performed in compliance with the generally well known polyacetal manufacturing conditions and using a similar catalyst.

A particularly preferable working mode is realized, when trioxane as the main monomer, a small amount of cyclic ether or cyclic formal as a comonomer and, further, polydimethyl siloxane glycidyl ether added thereto are reacted at 60 ~ 150°C using a cation active catalyst such as trifluoroboron or its complexes. etc.

And in manufacturing the silicon containing polyacetal copolymer, such well known polymerization degree adjusters as dimethyl acetal may be added without departing from the spirit of this invention.

The silicon containing polyacetal copolymer of this invention obtained in this way is a highly polymerized product having siloxane segment and polyacetal polymer bound by covalent bond, which is a novel copolymer having excellent impact and water resistance, lubricant properties and wear resistance characteristics and, therefore, a useful material in such fields as automobile, electrical, electronic parts, etc., in which it is exposed to harsh working environments involving high temperatures, high humidities, etc.

In the following, this invention is described in connection with its embodiments, but it will not be bound thereby:

Example 1

To 98 parts by weight of trioxane and 2 parts by weight of ethylene oxide, 0.01% by weight of polydimethyl siloxane diglycidyl ether having glycidyl groups at both terminals thereof (number average polymerization degree approx. 25) was added and heated to 65°C with proper stirring. Subsequently, polymerization was carried out at 60 ~100°C, with a specified amount of boron trifluoride ethyl ether complex added.

With proceeding polymerization, the system became cloudy and solidified and 40 minutes later, the reaction was stopped by adding an aqueous solution of alcohol containing a small amount of triethyl amine. The product was pulverized, thrown into acetone to which a small amount of triethyl amine was further added, to be well cleaned, followed by drying in air.

The polymer obtained in this way showed a melt index of 5.0 and melting point of 168°C.

Example 2

A similar operation as that of Example 1 was run, except that, as a silicon oil reactive at both terminals, use was made of 3% by weight, in proportion to total monomers, of polydimethyl siloxane diglycidyl ether having glycidyl groups at both terminals (number average polymerization degree approx. 50), thereby yielding a silicon containing polyacetal copolymer with melt index 2.0 and melting point 165°C.

Example 3

A silicon containing polyacetal copolymer with melt index 2.0 and melting point 165°C was obtainined by a similar operation as in Example 1 or 2, except that use was made of 3% by weight, in proportion to total monomers, of polydimethyl siloxane monoglycidyl ether (number average polymerization degree approx. 500)

with its one terminal (X) being methyl group, as a terminally reactive silicone oil.

Example 4

A silicon-containing polyacetal copolymer with melt index 15 and melting point 115°C was obtained by performing a similar operation as in Example 3, using 10% by weight of the silicone oil used in Example 3, on the basis of total monomers.

Example 5

A silicon-containing polyacetal copolymer with melt index 20.5 and melting point 151°C was obtained by making a similar operation as in other embodiments, using as a terminally reactive silicone oil 20% by weight, on the basis of total monomers, of polydimethyl siloxane monoglycidyl ether (number average polymerization degree approx. 300) with one terminal (X) being $-OCH_3$.

Comparative Example 1

A polyacetal copolymer with melt index 5.5 and melting point 168°C was obtained by making the polymerization in the similar way as in Example 1 from trioxane and ethylene oxide,without using silicone oil.

Comparative Example 2

A polymer with melt index 6.5 and melting point 166°C was obtained by performing the similar operation as in Example 2, except that use was made of 3% by weight, on the basis of total monomers, of silicone oil with its both terminals being methyl group (number average polymerization degree approx. 25). However, absorption of siloxane segment was not recognized from the IR analysis of the film manufactured by melting this polymer.

Comparative Example 3

A silicone oil containing polyacetal resin composition was prepared by adding 3% by weight of silicone oil having no glycidyl group at its terminals which was used in Comparative Example 2 to polyacetal copolymer obtained in Comparative Example 1, followed by kneading. It should be noted that even a slight bleeding of silicone oil was recognized on the surface of the resin composition.

The polymers obtained in Examples 1 ~ 5 and Comparative Examples 1 ~ 3 were molded to be test pieces on which impact resistance test and measurements for tensile property, coefficient of friction and absorbency, etc., were carried out.

The results are summarily listed in Table 1.

The testing and measuring methods are as specified hereunder:

(1) Tensile property ASTM D638 shall be applied.
(2) Impact resistance test ASTM D256 shall be applied.
(3) Coefficient of dynamic friction (against steel and polyacetal) ASTM D1894 shall be applied.
(4) Water absorbency ASTM D 570 shall be applied.

Table 1

| | Example 1 | Example 2 | Example 3 | Example 4 | Example 5 | Comparative Example 1 | Comparative Example 2 | Comparativ Example 3 |
|---|---|---|---|---|---|---|---|---|
| Silicone oil (% by weight) | 0.01 | 3 | 3 | 10 | 20 | - | (3) * | (3) ** |
| Tensile properties | | | | | | | | |
| Rupture strength (kg/cm2) | 630 | 650 | 600 | 530 | 480 | 620 | 615 | 520 |
| Rupture elongation (%) | 70 | 75 | 95 | 120 | 180 | 60 | 62 | 45 |
| Impact resistance test Izot impact strength ($kg/cm^2$) (with notch, on the notch side) | 8.1 | 9.0 | 8.5 | 9.8 | 12.1 | 6.5 | 6.3 | 4.8 |
| Coefficients of dynamic friction | | | | | | | | |
| on steel | 0.12 | 0.10 | 0.10 | 0.10 | 0.10 | 0.15 | 0.15 | 0.11 |
| on polyacetal | 0.25 | 0.21 | 0.20 | 0.18 | 0.18 | 0.35 | 0.33 | 0.19 |
| Water absorbency (%) When dipped at 23°C for 24 hours | 0.16 | 0.09 | 0.11 | 0.05 | 0.05 | 0.25 | 0.23 | 0.20 |

* Silicone oil with both terminals being methyl groups was used.

** A composition having the same merely mixed therein.

## Claims

1. A silicon-containing polyacetal copolymer which comprises 50 to 99.999 per cent of a polyacetal segment bonded covalently to 0.001 to 50 percent by weight of a silicone oil unit having at least one reactive terminal group and designated by the general formula

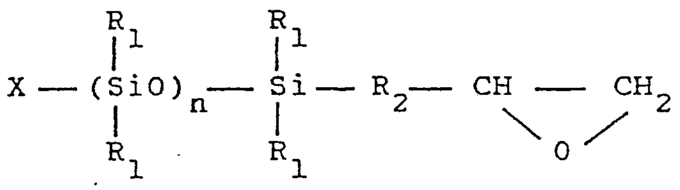 (A)

wherein $R_1$ denotes an alkyl or phenyl group; $R_2$ and $R_3$ each denote a divalent organic group; X denotes a group selected from $-NH_2$,

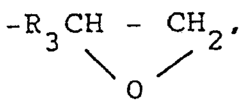

$R_4OH$, $R_5COOH$, $R_6COOR_7$, $-R_8$ and $-OR_9$, $R_4$ to $R_6$ each denote an alkylene group with 1 to 10 carbon atoms, $R_7$ to 9 each denote an alkyl group with 1 to 10 carbon atoms; and n is a number from 5 to 1000.

2. A silicon-containing polyacetal copolymer according to Claim 1 with its polyacetal segment being a homopolymer or a copolymer with polyoxymethylene as its main skeleton.

3. A silicon-containing polyacetal copolymer according to Claim 1 or 2, with its polyacetal segment formed by polymerization of mainly either one of formaldehyde or trioxane.

4. A silicon-containing polyacetal copolymer according to Claim 1 or 2, with its polyacetal segment being a copolyoxymethylene composed of either one of formaldehyde or trioxane as its main component and one or two or more members of comonomers selected from among cyclic ethers or cyclic formals.

5. A silicon containing polyacetal copolymer according to Claim 4, with its cyclic ether(s) or cyclic formal(s) being one or two or more member(s) selected from among ethylene oxide, propylene oxide, oxetane, dioxorane, dioxepane, trioxepane and butane diol formal.

6. A silicon-containing polyacetal copolymer according to any one of Claim 1 ~ 5, wherein $R_1$ in formula (A) is methyl group.

7. A manufacturing method of a silicon-containing polyacetal copolymer characterized in that one or more of formaldehyde, a mixture of formaldehyde and a comonomer copolymerizable therewith, trioxane, or a mixture of trioxane and a comonomer copolymerizable therewith are copolymerized, by heating in the presence of a catalyst, with at least 0.001% by weight of a terminally reactive silicone oil designated by the general formula

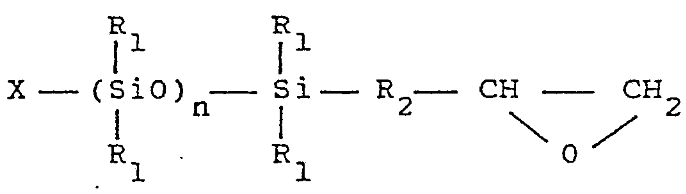 (A)

wherein $R_1$ denotes an alkyl or phenyl group; $R_2$ and $R_3$ each denote a divalent organic group; X denotes a group selected from $-NH_2$, -OH,

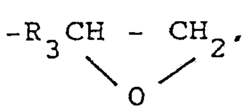

$R_4OH$, $R_5COOH$, $R_6COOR_7$, $-R_8$ and $-OR_9$, $R_4$ to $R_6$ each denote an alkylene group with 1 to 10 carbon

atoms, $R_7$ to $R_9$ each denote an alkyl group with 1 to 10 carbon atoms; and n is a number from 5 to 1000.

8. A manufacturing method of a silicone containing polyacetal copolymer according to Claim 7 characterized in that either one of formaldehyde or trioxane as the main component, one or two or more members of comonomers selected from among cyclic ethers or cyclic formals and a terminally reactive silicon oil represented by the general formula (A) are copolymerized by heating in the presence of a catalyst.

9. A manufacturing method of a silicon containing polyacetal copolymer according to Claim 8, wherein the cyclic ether(s) or cyclic formal(s) is (are) one (or two or more) member(s) selected from among ethylene oxide, propylene oxide, oxetane, dioxorane, dioxepane, trioxepane and butanediol formal.

10. A manufacturing method of silicon-containing polyacetal copolymer according to Claims 7 ~ 9, wherein $R_1$ in the formula (A) denotes a methyl group.